**Europäisches Patentamt**

**European Patent Office**

**Office européen des brevets**

(19)

(11) Publication number: **0 076 679**
**B1**

(12)  **EUROPEAN PATENT SPECIFICATION**

(45) Date of publication of patent specification: **04.03.87**

(21) Application number: **82305258.4**

(22) Date of filing: **04.10.82**

(51) Int. Cl.⁴: **B 60 K 41/04,** B 60 K 41/22,
F 16 H 5/66 // G01L3/10

(54) Control of motor vehicle transmission.

(30) Priority: **06.10.81 GB 8130170**
**15.01.82 GB 8201185**
**15.01.82 GB 8201184**
**16.06.82 GB 8217430**
**16.06.82 GB 8217490**

(43) Date of publication of application:
**13.04.83 Bulletin 83/15**

(45) Publication of the grant of the patent:
**04.03.87 Bulletin 87/10**

(84) Designated Contracting States:
**AT BE DE FR GB IT LU NL SE**

(56) References cited:
**DE-A-2 755 201**
**DE-B-1 115 051**
**GB-A- 841 706**
**GB-A-2 032 543**
**GB-A-2 047 362**
**US-A-3 273 386**
**US-A-3 688 609**
**US-A-3 861 206**
**US-A-4 021 712**
**US-A-4 031 782**
**US-A-4 220 058**

(73) Proprietor: **GKN TECHNOLOGY LIMITED**
**Group Technological Centre Birmingham New
Road**
**Wolverhampton West Midlands WV4 6BW (GB)**

(72) Inventor: **Forster, Brian Michael**
**11 Casson Drive**
**Harthill Sheffield S31 8WA (GB)**
Inventor: **Renowden, John Stuart**
**25 Gander Hill**
**Haywards Heath West Sussex, RH16 1QU (GB)**
Inventor: **Howell, Geoffrey James**
**11 Clayhall Road**
**Droitwich Worcestershire (GB)**

(74) Representative: **Dodd, Graham Marshall et al
Guest Keen and Nettlefolds plc Group Patents
and Licensing Department P.O. Box 55 Ipsley
House Ipsley Church Lane
Redditch Worcestershire B98 0TL (GB)**

Courier Press, Leamington Spa, England.

## Description

This invention relates to the control of transmission of a motor vehicle. The invention has been developed in relation to the control of an overdrive unit, but it is believed will also find application in control of automatic gearboxes.

An overdrive unit of known type is usually electrically operated by a switch under the control of the driver of the vehicle in which it is installed. When the overdrive is engaged, a higher gear ratio is brought into operation compared with that selected in the standard gearbox, whether manual or automatic, of the vehicle. It is easy for the driver to engage the overdrive, but the decision whether the overdrive is to be engaged or disengaged rests entirely with the driver of the vehicle. Typically, he will only engage the overdrive when cruising at relatively high speed for long periods of time, under which condition use of the overdrive can give appreciable gains in fuel consumption and significant reduction in noise level within the vehicle. However, the dependence on human judgement as to when the overdrive is to be engaged or disengaged means that the best fuel economy which could theoretically be obtained by using the overdrive will never in practice be achieved.

A further factor involved in conventional control by a driver of an overdrive unit is that the overdrive is usually arranged so that it can only be engaged when the standard gearbox of the vehicle is in top gear and possibly the next highest gear. This is because under hard driving conditions in lower gears the overdrive unit may be called upon to transmit a torque greater than that within its safe capacity. Thus while improved economy might be obtainable if the overdrive could be used in lower gears, this is not possible.

It has also been proposed, in British patent application 2,032,543, that an overdrive can be operated automatically by an electronic circuit, in which the overdrive is engaged or disengaged in accordance with predetermined threshold values of the negative pressure in the inlet manifold of the motor vehicle's engine. By use of such an arrangement, improved economy should be obtainable as compared with manual overdrive control, or the driver can adjust the changeover requirements of the overdrive if a sporty mode of travel is desired. However, the arrangement includes means for ensuring that the overdrive can only be engaged when top gear is selected, and because of this in combination with the use of inlet manifold negative pressure as the chief controlling parameter, the maximum economy will not be attainable.

It is the object of the present invention to provide for control of an overdrive unit in such a manner as to give improved fuel economy compared with that achievable by conventional control thereof as set forth above.

According to the invention, we provide a motor vehicle including an engine;

a transmission comprising a gearbox furnishing different gear ratios, and an overdrive unit operatively included in said transmission and having an input shaft, an output shaft, and means for effecting a change of ratio, as between direct drive and overdrive operation, between said input and output shafts;

means providing a signal representative of a value of torque in said transmission;

means responsive to the speed of said engine and providing a signal representative of said speed;

and a control circuit receiving said signals and arranged to carry out at predetermined intervals a program to determine whether to effect a change in ratio of said overdrive unit;

characterised in that said signal representative of torque in said transmission is provided by a sensor directly responsive to torque in said overdrive output shaft;

there is provided means responsive to the speed of said input shaft and providing a signal representative thereof and means in said control circuit for comparing, as part of said program, said engine speed and input shaft speed signals to determine the gear ratio of said gearbox; and

said control circuit stores a range of values of torque, related to said input shaft speed and gear ratio, below which values the overdrive unit can be brought into overdrive operation, and a further range of such values above which the overdrive unit should be brought into direct drive operation.

Because of the use of torque measured in the overdrive unit as a controlling parameter, the overdrive can be allowed to be engaged when the main gearbox of the vehicle is in gears other than top gear, which enables improved economy to be achieved. The overdrive will be disengaged if torque rises above a predetermined safe level, provided, as described hereafter, that the vehicle's engine speed will not rise above a safe level upon disengagement.

It will be appreciated that measurement of torque in the unit of the invention is important, and a preferred means for measuring torque is described hereafter.

The invention will now be described by way of example with reference to the accompanying drawings of which:—

Figure 1 shows an overdrive unit to which the invention may be applied;

Figure 2 shows schematically the parameters sensed in controlling the overdrive unit;

Figure 3 shows operation of the control circuit of the overdrive unit.

Figure 4 is a diagrammatic perspective view of a torque measuring device

Figure 5 is a circuit diagram of the torque measuring device

Figure 6 is an alternative circuit diagram.

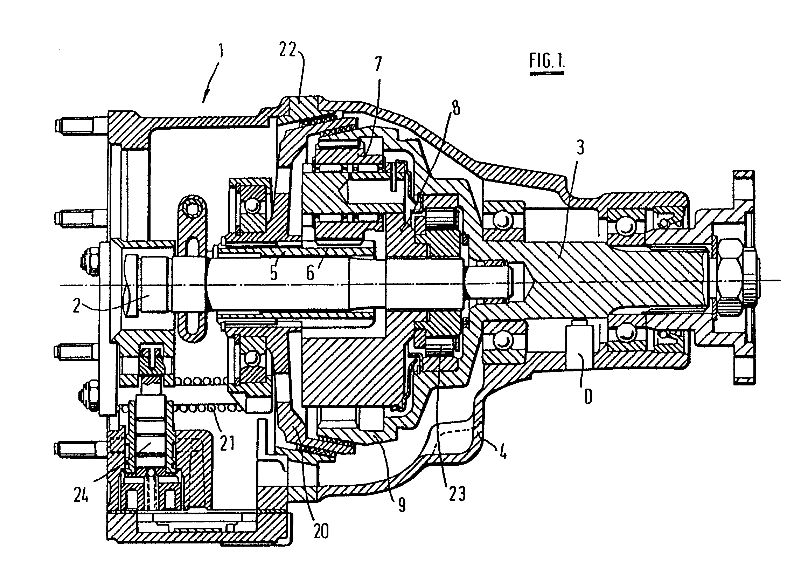

Referring firstly to Figure 1, an overdrive unit 1 comprises an input shaft 2 and an output shaft 3 mounted in a casing 4. On input shaft 2 is rotatably mounted a sleeve 5 fixed to a sun gear 6 meshing with planet gears 7. The planet gears 7 are mounted on a planet carrier 8 which is secured to the input shaft 2. An internally toothed annulus 9 forms part of output shaft 3, which connects to the drive shaft or the like of the vehicle (not shown). An axially movable cone clutch assembly 20 is slidable along splines on sleeve 5, and is urged in one direction by springs 21 and in the opposite direction by hydraulic means (not shown) electrically controllable by a solenoid operated valve under command of a control unit described herafter. Hydraulic pressure to operate the overdrive is derived from a pump 24 incorporated in the unit. A shaft speed sensor C (not shown) is located adjacent a toothed wheel fitted to power input shaft 2, and extends through and is fixed to casing 4 in such a manner that it can be removed from the exterior of the overdrive unit as an aid to maintenance. A one way clutch 23 is disposed between the output shaft 3 and input shaft 2. When the cone clutch assembly is moved to the right by springs 21, it locks the annulus 9 to sleeve 5 and direct drive is provided through clutch 23. When overdrive is required to be engaged a signal from the control unit operates the solenoid valve to cause the cone clutch assembly to be moved to the left to lock the sun gear to a brake ring 22 and provide drive through the planet gears and annulus. The overruning of input shaft 2 by output shaft 3 is permitted by clutch 23. Also mounted on casing 4 adjacent shaft 3 is a torque sensor D which measures torque in the output shaft 3. The torque sensor D is also mounted in such a way as to be removable for maintenance.

The control unit contains a micro-processor and is mounted either on the overdrive unit or at some other location in the vehicle where environmental conditions are satisfactory for reliable operation thereof.

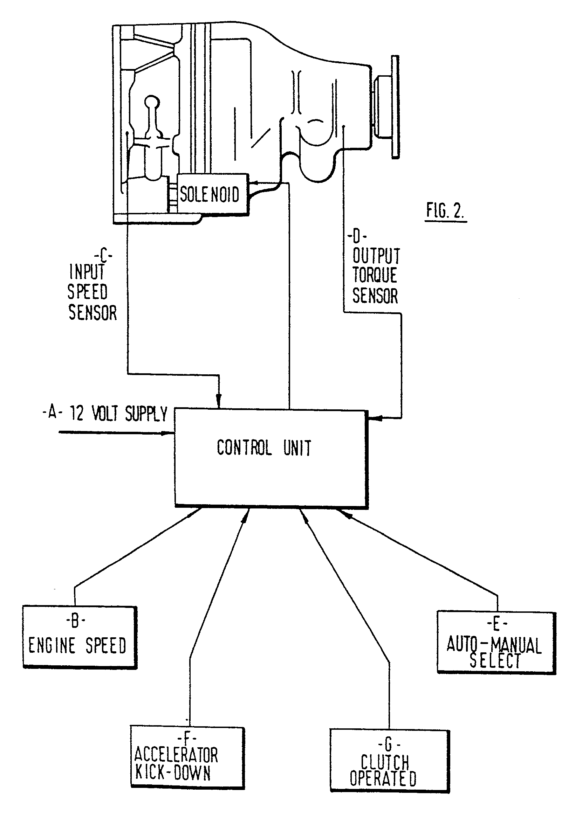

In Figure 2 is shown the schematic representation of signals feeding the micro-processor overdrive control unit. "A" is an electrical supply taken from the vehicle by which the micro-processor, associated sensors and the overdrive operating solenoid are enabled to function. Sensors "C" and "D" are contained within the overdrive unit and measure the values of overdrive input shaft speed and output shaft torque respectively. These signals are fed into the micro-processor control unit. An input signal to the micro-processor is taken from the engine ignition circuit in order that a value for the engine speed can be derived. This is shown as "B" in Figure 2. Signal "E" allows the driver to select either automatic operation of the overdrive via the micro-processor control unit or manual selection which will either inhibit operation of the overdrive or allow manual overdrive selection by the driver. Two further signals are provided for the control unit, an accelerator kick-down signal "F" and a clutch operated signal "G". The accelerator kick-down switch is attached to the accelerator pedal and allows the overdrive to be disengaged, providing the control unit decides the conditions are acceptable when, for example, overtaking becomes necessary. The clutch operated signal is used to prevent operation of the overdrive while gear changing is taking place.

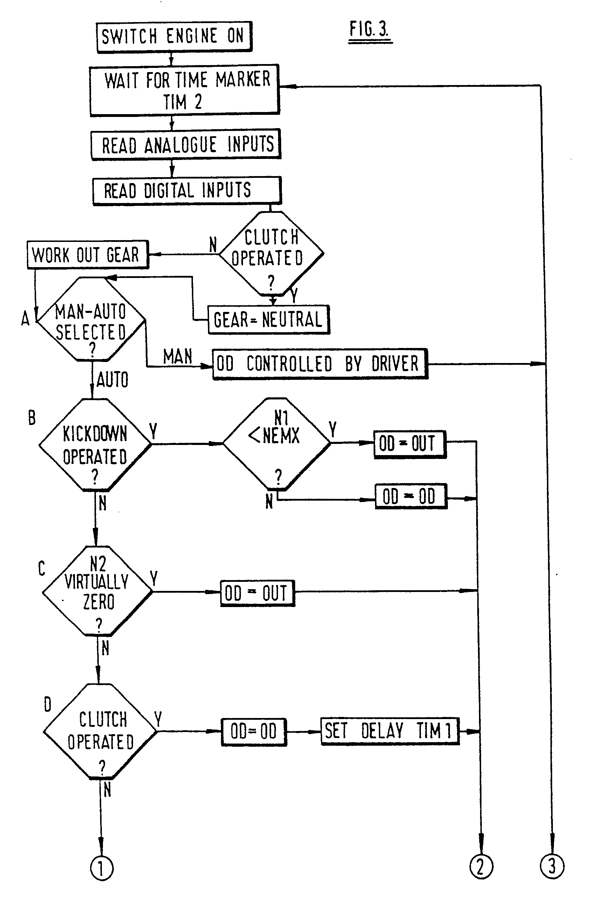

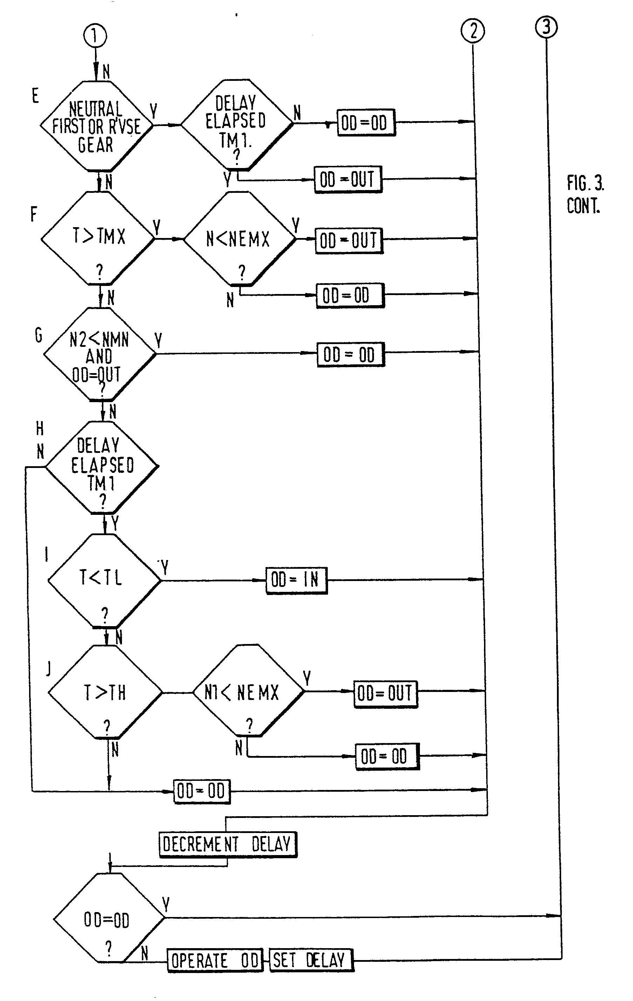

Referring now to Figure 3 there is shown a schematic representation of an overdrive control operation program which is carried out by the control unit, capable of analysing the input signals to the control unit, examining these in respect of stored reference data and applying a set of predetermined rules in order to determine when the overdrive is to be engaged.

It will be readily apparent that such an operation program must be tailored to suit particular internal combustion engines since torque and speed are dependent on the engine configuration chosen, power developed and type of gearing chosen.

Figure 3 represents a typical mode of operation of the control system. The following symbols are used in Figure 3, for sensed, derived, and stored parameters:—

| | |
|---|---|
| TIM 1 | Basic cycle time of change of state of overdrive, |
| TIM 2 | Cycle time of data acquisition, |
| $N_1$ | Engine speed—Item B Figure 2, |
| $N_2$ | Overdrive input speed—Item C, Figure 2, |
| GR | Calculated gear ratio—derived from Table R, |
| Table R | Stored table of ratios $N_1/N_2$ for each forward gear, |
| T | Overdrive output torque—Item D Figure 2, |
| TMX | Maximum torque allowed for overdrive selection without causing damage to the overdrive, |
| NEMX | Maximum engine speed allowed for overdrive to be disengaged without causing damage to the engine, |
| NMN | Minimum overdrive input speed required to provide sufficient hydraulic pressure for overdrive operation, |
| TL | Torque value related to overdrive input speed and gear ratio below which overdrive can be selected, |
| TH | Torque value related to overdrive input speed and gear ratio above which overdrive should be disengaged, |
| Table A | Stored table of values TL related to overdrive input speed $N_2$ and calculated gear ratio GR, |
| Table B | Stored table of values TH related to overdrive input speed $N_2$ and calculated gear ratio GR. |

The values contained in stored tables, A, B, R, will be determined for a particular vehicle and in respect of tables A and B will be generally based on the torque/speed plot for the particular engine. For a particular engine a torque/speed curve can be drawn representing the maximum engine capability. In practice a value of 90% of the maximum may be taken as the practical engine capability allowing for variation in performance between vehicles. If overdrive remained engaged above this torque level the vehicle would begin to decelerate and from these torque levels values of TH can be determined for different overdrive input speeds and gear ratios to formulate Table B.

Having determined the practical engine capability a torque/speed curve can be drawn representing the engine capability not to be exceeded when overdrive is selected. This is chosen to be for example 10% below the practical engine capability so that when maximum power is required the system will provide for direct drive i.e. the overdrive unit will be disengaged. From this curve can be constructed a further torque/speed curve taking account of the overdrive ratio which determines the maximum engine capability for overdrive availability, i.e. torques below which overdrive can be selected. From these torque levels, values of TL can be determined for different overdrive input speeds and gear ratios to formulate Table A. The difference between the curves of TL and TH gives a dead band to prevent hunting between engagement and disengagement of the overdrive.

The values chosen in this description have been determined by theoretical calculation and may in practice require modification. In general terms, the control system aims to use the highest gear possible under any set of given conditions and will select overdrive under all suitable conditions. Thus, as maximum fuel efficiency can be achieved with selection of overdrive, the control system attempts to maximise the fuel efficiency. However the system also allows maximum performance to be obtained if the vehicle is driven hard.

As an illustration of the program the operation sequence of the control logic shown in Figure 3 is now described.

The program begins to run as soon as the engine is switched on. After the data acquisition cycle time TIM2 has elapsed, all the data given by the sensors and detectors B to G (Figure 2) is read. The values and conditions read are stored to be used further in the program as described hereafter.

The first condition examined by the program is whether the clutch is operated. If yes, no gear ratio GR can be calculated, but if the clutch is not operated a gear ratio GR can be calculated by dividing engine speed by overdrive input speed and comparing the ratio $N_1/N_2$ with the values stored in Table R. The next check carried out by the program is whether manual or automatic has been selected by the driver of the vehicle, point A in the program. If manual has been selected, the overdrive is controlled by the driver and the program of the control system takes no further part in overdrive control. However, if automatic overdrive operation has been selected by the driver, a check is then carried out, point B in the program, whether the accelerator controlled kickdown switch is operated. If yes, the engine speed $N_1$ is checked relative to the maximum permissible engine speed NEMX, and if $N_1$ is less than this value the decision is made to disengage the overdrive if it is engaged. If $N_1$ is equal to or greater than NEMX, it is not safe to disengage the overdrive and the decision is the overdrive should remain engaged if it is already in that condition.

The next check made by the program, point C, is whether overdrive input speed $N_2$ is equal or virtually equal to zero. If yes, which means the vehicle is at rest or virtually at rest, the decision is to disengage the overdrive. If no, the program proceeds to point D at which clutch operation is checked. If yes, the decision is the overdrive should not change state and a delay TIM1 is set. The purpose of this is to prevent a rapid change of overdrive state immediately after a gear change has been carried out. The delay TIM1, typically about one second, allows conditions to steady after the gear change, preventing the overdrive from changing state in reaction to a transient condition. If the clutch is not operated, the program then checks for neutral, first or reverse gear, point E. If any of these gear conditions exists, in which overdrive should not be engaged, the decision is to disengage the overdrive provided delay TIM1 has elapsed. Until TIM1 has elapsed, the overdrive, if engaged, will remain in the engaged condition.

The next check made by the program, point F, is whether overdrive output torque T is greater than the maximum allowable torque TMX. If yes, and provided the engine speed $N_1$ is less than the maximum safe engine speed NEMX, the decision is for the overdrive to be disengaged. If, however, engine speed $N_1$ is greater than maximum safe speed NEMX, the decision is that the overdrive should remain engaged as the overdrive unit is less likely to suffer damage from carrying excess torque for a short time than is the engine likely to suffer damage from being over-speeded. At point G, the program checks whether overdrive input speed $N_2$ is less than a minimum value and the overdrive is disengaged. If this condition exists, the overdrive will remain in its disengaged state. This is because when the overdrive input speed is minimal, there will not be sufficient hydraulic pressure available from the pump incorporated in the overdrive unit to engage the overdrive unit. Provided this condition does not exist, the program will proceed, point H to check whether delay TIM1 has elapsed, and if it has will check, point I, whether the torque T is below the value TL at which overdrive can be selected. If yes, the decision is for the overdrive to be engaged. If no, the program checks whether torque is greater than TH, and if it is, and engine speed is less than NEMX, the decision is to disengage the overdrive. If engine speed is greater than or equal to NEMX, the overdrive will remain in its existing state. If at point J torque is not greater than TH, the overdrive will remain engaged, which decision is also reached from point H in the program if delay TIM1 has not elapsed.

The program has now examined all the conditions requiring engagement, disengagement, or no action in respect of the state of the overdrive unit. Thereafter, after expiry of the required delay indicated as decrement delay, the program examines the decision which has been made earlier in respect of the change of state or otherwise of the overdrive. If the decision was for no change of overdrive state to be made, the program will recommence, but if the decision was for engagement·or disengagement of the overdrive this will be acted upon. Thereafter the decrement delay will be reset to ensure that the overdrive cannot change its state again within the delay period, and the program will run again.

It will be noted that, although the program will attempt to have the overdrive engaged under all suitable conditions, to give maximum fuel economy, by virtue of the kick-down facility and the provision for disengagement of the overdrive when torque exceeds TH, the maximum performance of the vehicle which can be obtained with the conventional gearbox is also available.

It is appreciated that the operation program as described above can be written in a number of ways and the final form will be dictated by cost and flexibility of the micro-processor system used. This choice is designed only to illustrate the operational principles. The flexibility of the micro-processor concept has the advantage in that it allows additional inputs to be accommodated at virtually no extra cost.

Torque in the output shaft 3 of the overdrive may be measured by a sensor which makes use of the known property that when a ferro magnetic material subjected to a magnetic field is stressed, the magnetic field in the material is distorted in accordance with the magnitude and direction of the stress. The sensor may comprise one or more coils positioned closely adjacent the surface of the shaft, energised with an appropriate frequency and wave form, and one or more sensing coils which detect the magnetic field near the surface of the shaft as induced by the energising coils and as modified by the stress in the shaft. Such sensors are known.

It will be noted from the above description that an important parameter in control of the overdrive unit is torque as measured at the output shaft of the overdrive unit. One particularly convenient form of measuring such torque makes use of the inverse Wiedermann effect. This is the effect that when a ferro-magnetic material subjected to a magnetic field is stressed, the magnetic field in the material is distorted in accordance with the magnitude and direction of the stress. When a cylindrical shaft is loaded in torsion, the principle stress line are 45° helices around the axis of the shaft, one in tension and one in compression. The magnetic permeability of the shaft material is also changed, in opposite senses in these directions. Accordingly the magnetic field measured by sensors spaced axially and circumferentially of the shaft in different orientations will provide a measurement of the torque in the shaft.

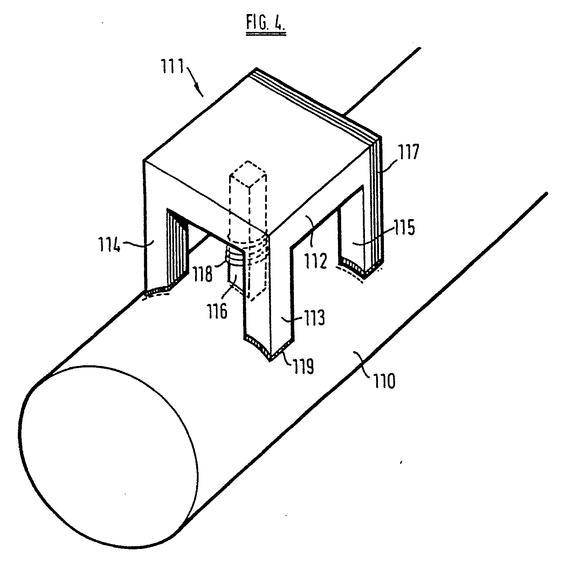

Referring now to Figure 4 of the drawings, this shows a shaft 110 which is rotatable and subject to a torque. Positioned adjacent to the shaft is a magnetic core structure 111 having a base 112 and four poles extending towards the shaft from the corners of the base 112. Three of the poles are visible at 113, 114, 115. Also extending from the base, at the centre thereof, towards the shaft, is a fifth pole 116. The pole structure may be assembled from a plurality of iron laminations 117, or may be a ferrite material.

The fifth pole 116 carries a coil 118 which can be electrically energised from a suitable power supply so as to induce a magnetic field in the shaft 110. The other four poles are provided with sensors for detecting the magnetic field in the poles. The core assembly, coil 118, and sensors would be encapsulated in a suitable resin to form a robust unit which can easily be mounted in the over-drive unit adjacent the output shaft thereof.

The sensors associated with the poles of the core structure may be coils carried by the poles. Alternatively, Hall-effect sensors could be interposed between the ends of the poles and the shaft. A Hall-effect sensor uses a semi-conductor material through which an electric current is flowing, the effect of a magnetic field on which is to distort the electric field in a semi-conductor material, which can be detected at an output voltage. Hall-effect sensors are available as relatively small components which can easily be mounted on the ends of the poles of a structure such as that shown in Figure 4.

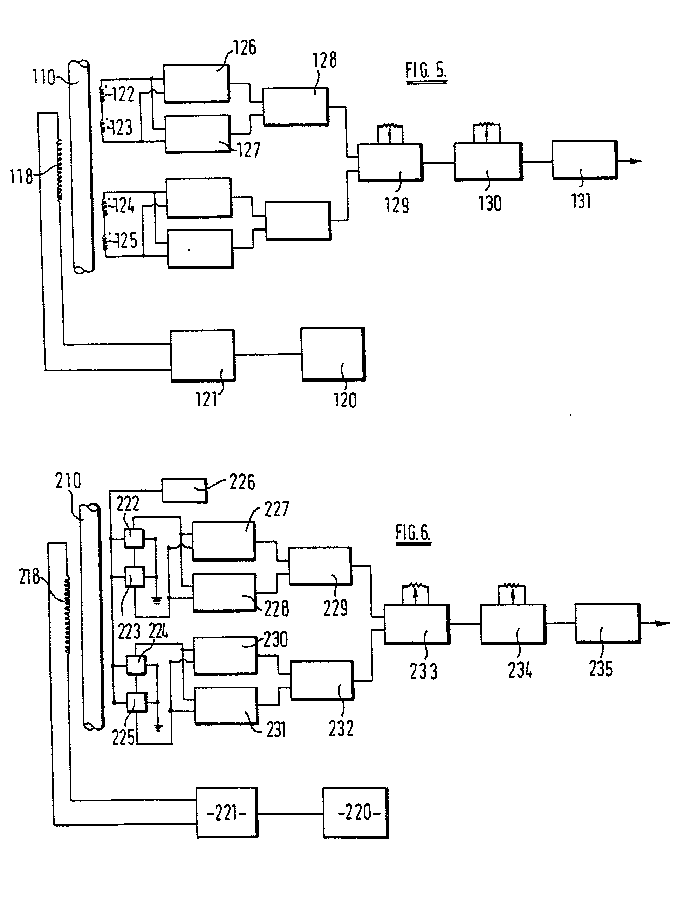

As explained above, when the shaft is subjected to torque the magnetic permeability is altered in that it is increased in one direction helically of the shaft and decreased in the opposite helical sense. Thus, for torque applied in the appropriate sense to the shaft, the magnetic field in poles 114 and 115 will be increased and that in the other two poles decreased. The change in field detected by sensors associated with the poles can then be used to provide a measurement of the torque in the shaft. A suitable circuit for this purpose is shown in Figure 5.

In Figure 5, coil 118 on pole 116 is shown adjacent the shaft 110, and is energised with an appropriate wave form derived from an oscillator 120 and driving circuit 121. For example, the coil 118 may be energised by an alternating current at a frequency and of a magnitude to magnetically saturate the material of the shaft in one sense, followed by saturation in the opposite sense. The sensors associated with poles 114, 115 are shown as coils 122, 123, and the sensors associated with the other poles as coils 124, 125. The coils 122, 123 are connected in series, and their outputs applied, in parallel to them, to a positive peak detector 126 and negative peak detector 127 and thence to a differential amplifier 128. The output signal from differential amplifier 128 is the difference between the magnitude of the positive and negative peaks of the signals from coils 122, 123. The signals from coils 124, 125 are similarly dealt with, by positive and negative peak detecting circuits and a differential amplifier.

A differential amplifier 129, with a zero setting facility, subtracts the signal derived from coils 124, 125 from that of coils 122, 123. The output signal from this differential amplifier then represents the magnitude of torque in the shaft, and is amplified and filtered at 130, 131 to provide a usable output signal.

Referring now to Figure 6 of the drawings this shows a circuit for use with Hall-effect sensors instead of coils. The driving coil 218 on pole 216 is shown adjacent the shaft 210, and is electrically energised with an appropriate wave form derived from an oscillator 220 and driving circuit 221. The Hall-effect sensors associated with poles 214, 215 are shown at 222, 223, and the Hall-effect sensors associated with the other poles at 224, 225. All the Hall-effect sensors are supplied with a constant current from a source 226. The outputs from the Hall-effect sensors 222, 223 are connected in series, to a positive peak detector 227 and negative peak detector 228 in parallel with one another. A differential amplifier 229 gives an output signal representing the difference between the positive and negative peaks of the signals from Hall-effect sensors 222 223. Similarly the outputs from Hall-effect sensors 224, 225 are connected to peak detectors 230, 231 and differential amplifier 232.

With torque in the shaft 210 in one direction, the output from sensors 222, 223 will increase and that from sensors 224, 225 will decrease. A differential amplifier 233, having a zero setting facility, receives the outputs from differential amplifiers 229, 232, and subtracts them, and the output from amplifier 233 is a direct measure of the torque in the shaft. This output can be amplified by an amplifier 234 whose gain can be varied, and filtered by a filter 235, to provide a usable output signal.

In both the circuits of Figure 5 and Figure 6, the angular position of the shaft may be detected during rotation thereof by, for example, a detector coil responsive to passage of a marker formation such as a projection or depression on the shaft surface. There may then be provided a circuit operative so that a measurement of torque is made only when the shaft is in a particular angular position, to eliminate rotational error in the shaft which may be present from run-out, or lack of uniformity in the shaft material.

**Claims**

1. A motor vehicle including an engine; a transmission comprising a gearbox furnishing different gear ratios, and an overdrive unit (1) operatively included in said transmission and having an input shaft (2), an output shaft (3), and means (5—9, 20—23) for effecting a change of ratio, as between direct drive and overdrive operation, between said input and output shafts (2, 3); means (D) providing a signal representative of a value of torque in said transmission; means (B) responsive to the speed of said engine and providing a signal representative of said speed; and a control circuit receiving said signals and arranged to carry out a predetermined intervals a program to determine whether to effect a change in ratio of said overdrive unit; characterised in that said signal representative of torque in said transmission is provided by a sensor (D) directly responsive to torque in said overdrive output shaft (3);

there is provided means (C) responsive to the speed of said input shaft (2) and providing a signal representative thereof and means in said control circuit for comparing, as part of said program, said engine speed and input shaft speed signals to determine the gear ratio of said gearbox;

and said control circuit stores a range of values of torque TL, related to said input shaft speed and gear ratio, below which values the overdrive unit can be brought into overdrive operation, and a further range of such values TH above which the overdrive unit should be brought into direct drive operation.

2. A vehicle according to Claim 1 further characterised in that said control circuit includes means for preventing the overdrive unit from being brought into direct drive operation if said engine speed exceeds a predetermined allowable maximum speed.

3. A vehicle according to Claim 2 further characterised in that said gearbox is a manual gearbox and there is a driver-operated clutch, and means for providing to said control circuit a signal (G) indicative of disengagement of said clutch, and further including a kick-down switch providing a signal (F) to said control circuit indicative of kick-down operation of an accelerator control of the vehicle.

4. A vehicle according to any one of the preceding claims further characterised in that said torque is measured by means (118, 116; 218) for inducing a magnetic field in a surface region of said output shaft, and at least one sensor (122—125; 222—225) positioned adjacent said surface region to detect changes in said magnetic field due to torque in said shaft and provide an electrical output signal representative of said torque.

5. A vehicle according to Claim 4 further characterised by a ferro-magnetic core structure (111) having four poles (113—115,—) positioned adjacent the surface of the shaft, with a first pair of poles spaced axially and circumferentially of the shaft, a second pair of poles spaced axially and circumferentially of the shaft in a different orientation from said first pair, a sensor associated with each of said poles to measure the magnetic field therein and producing an electrical output signal representing said magnetic field, means (128; 229) for adding the output signals from said sensors of said first pair of poles, means (—; 232) for adding the output signals from said sensors of the second pair of poles, and means (129; 233) for subtracting the added signals thus derived from one another to produce an output signal representing torque in the shaft.

**Patentansprüche**

1. Kraftfahrzeug einschliesslich Motor einem; Triebwerk bestehend aus einem Getriebe, das verschiedene Ubersetzungsverhältnisse ermöglicht und einer Schongangeinheit (1), die antriebsmässig in das Triebwerk miteinbezogen ist und eine Eingangswelle (2), eine Ausgangswelle (3) und Mittel (5—9, 20—23) zum Wechseln des Übersetzungsverhältnisses aufweist und zwar von Direktdurchtrieb zu Schongangbetrieb und zwischen Eingangs- und Ausgangswelle (2, 3);

Mittel (D), die ein einen Drehmomentwert in dem Triebwerk repräsentierendes Signal erzeugen;

Mittel (B), die auf die Drehzahl des Fahrzeugmotors reagieren und ein diese Drehzahl repräsentierendes Signal erzeugen; und

einen Regelkreis, der die oben erwähnten Signale empfängt und so ausgebildet ist, dass er in vorbestimmten Zeitabständen ein Programm ausführt um festzustellen, ob eine Änderung in dem Übersetzungsverhältnis der Schongangeinheit ausgelöst werden soll;

dadurch gekennzeichnet, dass das den Drehmomentwert in dem Triebwerk vertretende Signal von einem Sensor (D) abgegeben wird, der direkt auf das Drehmoment in der Schongangausganswelle (3) reagiert;

das Mittel (C) vorgesehen sind, die auf die Drehzahl der Eingangswelle (2) reagieren und eine diese Drehzahl repräsentierendes Signal erzeugen und Mittel in dem genannten Regelkreis, um als Teil des genannten Programms die Signale der Motordrehzahl und der Eingangswellendrehzahl zu vergleichen, um das Übersetzungsverhältnis des Getriebes zu bestimmen; und dass der Regelkreis eine Reihe von auf die Eingangswellen drehzahlf und das Übersetzungsverhältnis sich beziehende Drehmomentwerte (TL), unterhalb derer die Schongangeinheit eingeschaltet werden kann und eine weitere Reihe von TH-Werten speichert, oberhalb derer der Schongang auf Direktdurchtrieb geschaltet werden sollte.

2. Fahrzeug nach Anspruch 1, dadurch gekennzeichnet, dass der Regelkreis Mittel aufweist, die verhindern, dass der Schongang am Direktdurchtrieb geschaltet wird, wenn die Motordrehzahl einen vorbestimmten zulässigen Maximalwert übersteigt.

3. Fahrzeug nach Anspruch 2, dadurch gekennzeichnet, dass es sich bei dem Getriebe um ein Schaltgetriebe handelt und eine von dem Fahrer betätigte Kupplung vorgesehn ist sowie Mittel, die dem Regelkreis ein das Ausrücken der Kupplung andeutendes Signal (G) zuleiten, und weiterhin einen Kick-Down-Schalter, der dem Regelkreis ein Signal (F) zuleitet, welches andeutet, dass das Gaspedal des Fahrzeugs sich in Kick-Down Stellung befindet.

4. Fahrzeug nach einem der vorhergehenden Ansprüche, dadurch gekennzeichnet, dass das Drehmoment durch Mittel (118, 116; 218) gemessen wird, die ein magnetisches Feld in einem Oberflächenbereich der Ausgangswelle schaffen und dass wenigstens ein Sensor (112—125; 222—225) vorgesehen ist, der im Anschluss an diesen Oberflächenbereich angeordnet ist, der die durch das Drehmoment in der genannten Welle hervorgerufenen Veränderungen in dem magnetischen Feld anzeigt und ein das Drehmoment wiedergebendes elektrisches Ausgangssignal erzeugt.

5. Fahrzeug nach Anspruch 4, gekennzeichnet durch eine ferromagnetische Kernstruktur (111) mit vier Polen (113—115, —), die nahe der Wellenoberfläche angeordnet sind, wobei ein erstes Paar Pole in einem axialen Abstand und umfangsverteilt um die Welle und ein zweites Paar Pole in einem axialen Abstand voneinander und umfangsverteilt um die Welle in einer anderen Richtung als das erste Paar angeordnet sind und jedem Paar Pole ein Sensor zugeordnet ist, um das magnetische Feld in ihnen zu messen und ein dieses magnetische Feld repräsentierendes elektrisches Ausgangssignal erzeugt, sowie Mittel (128; 229) zum Addieren der Ausgangssignale der Sensoren des ersten Polpaares, Mittel (—; 232) zum Addieren der Ausgangssignale der Sensoren des zweiten Polpaares und Mittel (129; 223) zum Subtrahieren der auf diese Weise erhaltenen addierten Signale, um ein das Wellendrehmoment repräsentierendes Ausgangssignal zu erhalten.

**Revendications**

1. Véhicule à moteur comprenant un moteur, une transmission comprenant une boîte de vitesses donnant différents rapports de vitesse, et un ensemble de surmultiplication (1) incorporé à la transmission et ayant un arbre d'entrée (2), un arbre de sortie (3) et un dispositif (5—9, 20—23) destiné à changer un rapport de vitesse, par exemple entre une prise directe en un fonctionnement en surmultipliée, entre les arbres d'entrée et de sortie (2, 3),

un dispositif (D) transmettant un signal représentatif d'une valeur du couple dans la transmission,

un dispositif (B) sensible à la vitesse du moteur et destiné à transmettre un signal représentatif de la vitesse, et

un circuit de commande recevant lesdits signaux et destiné à exécuter à intervalles prédéterminés, un programme de détermination du fait qu'un changement du rapport de l'ensemble de surmultiplication doit être réalisé, caractérisé en ce que le signal représentatif du couple dans la transmission est transmis par un capteur (D) directement sensible au couple de l'arbre de sortie (3) de la surmultiplication,

il comporte un dispositif (C) sensible à la vitesse de l'arbre d'entrée (2) et transmettant un signal représentatif de cette vitesse, et un dispositif placé dans le circuit de commande et destiné à comparer, dans une partie du programme, les signaux de vitesse du moteur et de vitesse de l'arbre d'entrée afin que le rapport de la boîte de vitesse soit déterminé, et

le circuit de commande conserve une gamme de valeurs de couple TL reliées à la vitesse de l'arbre d'entrée et aux rapports de vitesse, l'ensemble de surmuliplication pouvant être mis à l'état de surmultiplication au-dessous de ces va-

leurs, le circuit de commande conservant une gamme supplémentaire de valeurs TH au-dessus desquelles l'ensemble de surmultiplication doit être mis en prise directe.

2. Véhicule selon la revendication 1, caractérisé en ce que le circuit de commande comporte un dispositif destiné à empêcher la mise de l'ensemble de surmultiplication en prise directe lorsque la vitesse du moteur dépasse une vitesse maximale permise prédéterminée.

3. Véhicule selon la revendication 2, caractérisé en outre en ce que la boîte de vitesses est une boîte manuelle, et le véhicule comporte un embrayage commandé par l'opérateur et un dispositif destiné à transmettre au circuit de commande un signal (G) représentatif de débrayage de l'embrayage, et comprenant en outre un commutateur d'enfoncement donnant au circuit de commande un signal (F) représentatif de l'enfoncement d'une commande d'accélérateur du véhicule.

4. Véhicule selon l'une quelconque des revendications précédentes, caractérisé en outre en ce que le couple est mesuré par un dispositif (118, 116; 218) destiné à induire un champ magnétique dans une région superficielle de l'arbre de sortie, et au moins un capteur (122—125; 222—225) placé près de la région superficielle afin qu'il détecte les changements du champ magnétique dûs au couple dans l'arbre et donne un signal électrique de sortie représentatif du couple.

5. Véhicule selon la revendication 4, caractérisé en outre par une structure à noyau ferromagnétique (111) ayant quatre pôles (113—115, —) placée près de la surface de l'arbre, avec un première paire de pôles espacés axialement et circonférentiellement par rapport à l'arbre, une seconde paire de pôles espacés axialement et circonférentiellement par rapport à l'arbre avec une orientation différente de celle de la première pair, un capteur associé à chacun des pôles et destiné à mesurer le champ magnétique à l'intérieur et à former un signal électrique de sortie représentant ce champ magnétique, un dispositif (128, 229) destiné à ajouter les signaux de sortie des capteurs de la première paire de pôles, un dispositif (—; 232) destiné à ajouter les signaux de sortie des capteurs de la seconde pair de pôles, et un dispositif (129; 233) destiné à soustraire les signaux ajoutés ainsi tirés l'un de l'autre afin qu'ils forment un signal de sortie représentant le couple dans l'arbre.

FIG.1.

FIG. 2.

-C-
INPUT
SPEED
SENSOR

-D-
OUTPUT
TORQUE
SENSOR

SOLENOID

-A- 12 VOLT SUPPLY

CONTROL UNIT

-B-
ENGINE SPEED

-E-
AUTO-MANUAL
SELECT

-F-
ACCELERATOR
KICK-DOWN

-G-
CLUTCH
OPERATED

0 076 679

FIG. 3.

3

FIG. 3.
CONT.

## FIG. 4.

0 076 679

FIG. 5.

FIG. 6.

6